# EUROPEAN PATENT SPECIFICATION

(11) **EP 2 993 772 B1**
(45) Date of publication and mention of the grant of the patent: **01.05.2019**
(21) Application number: 15183899.2
(22) Date of filing: 04.09.2015
(51) Int. Cl.: H02M 3/02, H02J 4/00, H02M 7/42, H02M 1/00

(54) **MULTI-MODE POWER CONVERTER POWER SUPPLY SYSTEM**
ELEKTRISCHES STROMVERSORGUNGSSYSTEM MIT MEHRMODUS-STROMRICHTER
SYSTÈME D'ALIMENTATION ÉLECTRIQUE AVEC CONVERTISSEUR DE PUISSANCE MULTI-MODE

(30) Priority: 08.09.2014 US 201414480096
(43) Date of publication of application: 09.03.2016
(73) Proprietor: Astronics Advanced Electronic Systems Corp., Kirkland, WA 98034 (US)
(72) Inventor: Jouper, Jeffrey A., Newcastle, WA 98056 (US)
(74) Representative: Schmitt-Nilson Schraud Waibel Wohlfrom Patentanwälte Partnerschaft mbB

(56) References cited:
- EP-A2- 2 325 970
- WO-A1-2011/035326
- WO-A2-2007/130954
- JP-A- 2012 205 320
- JP-A- 2012 249 471
- US-A1- 2002 000 793
- US-A1- 2002 036 910
- US-A1- 2013 127 257
- US-A1- 2014 121 850

## Description

The subject matter of the present disclosure generally relates to power supplies, and more particularly relates to power supply systems having multi-mode converters.

Certain challenges are presented by the need to satisfy disparate power requirements of various loads within a power-limited environment, particularly when some of the loads are transient in their power demand. These challenges can be acute where it is also desirable to minimize the size, weight and cost of power supply equipment.

For instance, the power requirements of commercial passenger aircraft cabins can be varied and transient. In an emblematic multi-function aircraft seat, when in active operation a seat motor actuator requires 300W of direct current (DC) power, an inflight entertainment (IFE) unit requires 75W of DC power, and a power outlet suitable for use with personal electronic devices (PEDs) requires up to 200W of alternating current (AC) power. In previous designs, each of these systems required a separate power supply capable of powering each respective system. For the given example, 575W of power supply capacity would thus be required.

However, realistically significantly less power is required at any given time, as some systems are transient and are in standby, as opposed to operating, condition for extended periods. For instance, in an emblematic passenger aircraft a seat actuator may be in standby more that 90% of the time. The standby power requirements for such a system are typically only in the range of 10-20W. Therefore, the 300W power supply for the seat actuator sits idle for the majority of aircraft's use, while the weight of the power supply must be carried continuously. Furthermore, each power supply that attaches to the aircraft power grid must also convert the aircraft power to the native power required for the system it supports. This typically necessitates the inclusion of an electromagnetic interference (EMI) filter stage and a power factor correction (PFC) stage.

Power generated for PED use is generally AC power supplied by an outlet that is also in standby a portion of the time. The loads presented by PEDs are typically of a transient nature as well, as battery powered devices will vary in how much power they draw. This leaves the outlet power supply in a standby condition for approximately 50% of the time. Thus, the power supply supporting the outlet is yet another power supply that is underutilized a significant portion of the time but still must be carried for when its full capacity is required.

Document JP 2012 249471 A discloses a power supply system, wherein AC and DC loads are supplied from a DC power source (solar cell and a storage battery) using a DC-DC and a DC-AC converter. The system supplies the loads from an AC network when the power consumption can not be covered by the DC power source.

Document US 2013/0127257 A1 discloses a power generating system including: a plurality of power generating units for transmitting generated electric power by wireless via magnetic coupling between resonators; an AC combining section for combining AC energy output from AC converting and outputting sections of the power generating units and supplying the converted AC energy to an AC load; a DC combining section for combining DC energy output from DC converting and outputting sections of the power generating units and supplying the combined DC energy to a DC load; and an output control section for controlling an output of each power generating unit by transmitting a control signal to an output switching section of each power generating unit based on power consumption of at least one of the AC load and the DC load.

Document US 2014/121850 A1 discloses a power supply system for an aircraft.

The integration of power supplies also presents various challenges when the components the power supplies support have disparate and transient power requirements. Still, reduction of the number of needed power supplies and their associated components is desirable and can reduce unit acquisition and maintenance costs. In vehicle applications, such as in aircraft, weight reduction can result in significant operating cost savings.

The subject matter of the present disclosure is directed to overcoming, or at least reducing the effects of, one or more of the problems set forth above.

Disclosed is a power supply system for powering transient and steady-state loads.

According to the invention, a DC-DC converter and a DC-AC / DC-DC dual-mode converter operate in either a first or second mode of operation. In the first mode of operation, the DC-DC converter supplies DC power to a steady state load and several transient loads that are in a standby state, and the DC-AC / DC-DC converter supplies AC power to an AC load. When one of the transient DC loads request power, the second mode of operation is entered. DC-AC / DC-DC dual-mode converter transitions to producing DC power and is cross coupled with the DC-DC converter. Together the converters satisfy the power requirements of the DC loads. When the transient DC loads are no longer in an active state then the DC-AC / DC-DC dual-mode converter transitions back to supplying AC power to the AC load. When the AC load is a consumer power outlet, the temporary interruption in power to the outlet causes minimal inconvenience as most devices drawing power from outlets contain internal batteries that provide sufficient power for the duration of the interruption.

In environments with multiple loads of varying power requirements, the disclosed system and method allow for effective power management without the need for each component to have an individual power supply capable of supplying its full active-state requirements. Thus, the system's overall weight, size and complexity may be reduced.

The foregoing summary, preferred embodiments, and other aspects of the present disclosure will be best understood with reference to a detailed description of specific embodiments, which follows, when read in conjunction with the accompanying drawings, in which:

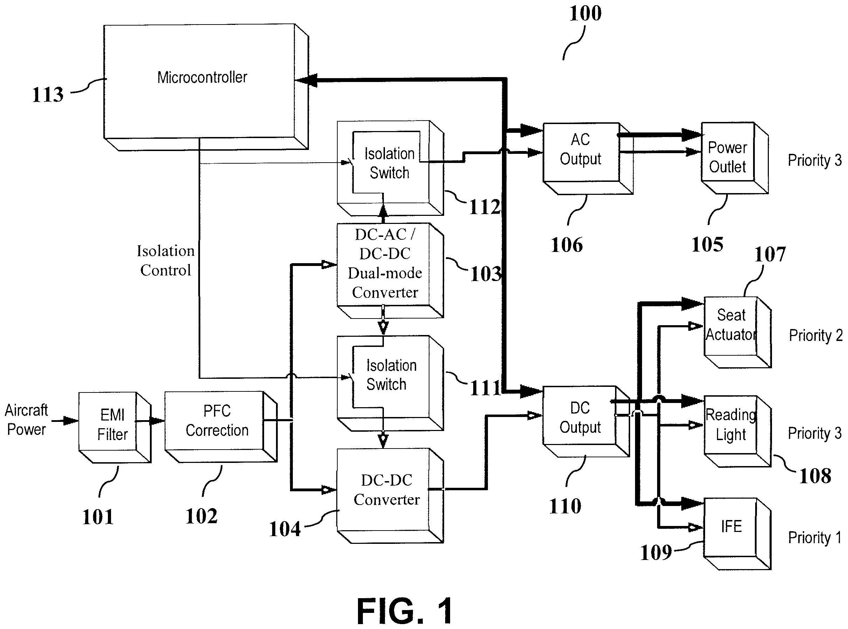

Figure 1 is a schematic diagram of an embodiment power supply system.

Like reference numbers and designations in the various drawings indicate like elements.

Disclosed is a multi-mode power supply system for handling dynamic power loading.

Figure 1 is a schematic diagram of embodiment power supply system **100,** which is installed in an aircraft. Power is received from a power source (not pictured), that is an aircraft generator. EMI filter **101** reduces electromagnetic interference from the power supply and prevents it from contaminating the aircraft's power grid. Power factor correction (PFC) stage **102** regulates the power factor and helps the system meet the power quality requirements of the aircraft. Other embodiments may employ different architectures with respect to these components. Power is passed from PFC stage **102** to DC-AC / DC-DC dual-mode converter **103** and DC-DC converter **104.**

Power supply system **100** has a first and second mode of operation. In the first mode of operation, DC-AC / DC-DC dual-mode converter **103** is configured to supply AC power to AC load **105** through AC output **106.** DC-DC converter **104** is configured to supply power to transient DC loads **107, 108** and steady-state DC load **109** through DC output **110.** First isolation switch **111** is electrically disposed between DC-AC / DC-DC dual-mode converter **103** and DC-DC converter **104.** Second isolation switch **112** is electrically disposed between DC-AC / DC-DC dual-mode converter **103** and AC output **106.** Microcontroller **113** oversees the functioning of power supply system **100** and communicates with various components using a communication bus. Preferably, microcontroller **113** monitors power usage, power demand, power delivery and generates signals that are sent to DC-AC / DC-DC converter **103.**

In the embodiment, AC load **105** is a consumer electrical outlet for supplying power to users in the aircraft's passenger cabin, for instance for use with PEDs such as laptops, cellular telephones, etc. Transient DC load **107** is a seat actuator that allows a passenger to selectively reposition their seat. Transient DC load **108** is a passenger reading light and steady-state DC load **109** is an IFE unit that may include such features as a touch-sensitive video screen. DC-DC converter **104** is of sufficient capacity to simultaneously supply operating power to load **109** and standby power to loads **107** and **108.**

In the embodiment, each of the loads is assigned a priority value indicating its importance relative to the other loads. The priority values provide a means by which to prioritize power distribution in power-limited environments, though other schemes may be utilized to determine what loads should be provided power in such circumstances. In the embodiment, three priority levels, 1, 2 and 3, are employed, with a value of 1 being the most important and a value of 3 being the least important. Loads **105** and **108** are each assigned a priority value of 3, load **107** is assigned a priority value of 2, and load **109** is assigned a priority value of 1.

In the embodiment, when in the first mode of operation, transient loads **107** and **108** are in a standby state and thus require small amounts of power, or standby power, while steady-state load **109** will require enough power for active operation, or operating power. In this mode of operation, first isolation switch **111** is in an open position and second isolation switch **112** is in a closed position. DC-AC / DC-DC dual-mode converter **103** supplies power to AC load **105.** DC-DC converter **104** provides operating power to steady-state load **109** and provides standby power to transient loads **107** and **108.**

When one of the transient DC loads, for instance load **107,** requests additional power, microcontroller **113** will determine whether DC-DC converter **104** has sufficient available power to meet the request. In this example, if a passenger wants to move their seat to a new position, they activate a button located on their seat, which requests the movement through a passenger control unit (PCU). The PCU communicates to the seat actuator system which in turn requests the appropriate amount of power from microcontroller **113** to complete the movement requested.

DC-DC converter **104** fulfills the power request if it has sufficient capacity. In this example, the microcontroller would grant the seat actuator permission to move the seat and the action would be completed.

If the DC-DC converter cannot fulfill the power request, then the microcontroller determines whether the requesting DC load has a higher priority value than AC load **105.** In this case it does and therefore power supply system **100** enters the second mode of operation. DC-AC / DC-DC dual-mode converter **103** ceases to supply power to AC load **105.** Second isolation switch **112** enters an open position and first isolation switch **111** enters a closed position. DC-AC / DC-DC dual mode converter **103** begins producing DC power and is cross coupled with DC-DC converter **104** to provide operating power to load **107.** In the example, the cross-coupled converters would then together supply sufficient power for the seat actuator to accomplish the requested move.

When the transient DC load that requested power no longer requires it, the flow of DC power from DC-AC / DC-DC dual-mode converter is halted, first isolation switch **111** enters an open state and second isolation switch **112** enters a closed state. DC-AC / DC-DC dual-mode converter once again produces AC power that is delivered to AC load **105.** In the example, this occurs when the passenger releases the seat movement button, after which the seat actuator stops the motion and removes the power request.

In certain embodiments, DC-DC converter **104** is sized so as to be able to supply steady-state power to a steady-state load and standby power to the transient DC loads, while the cross-coupling of DC-AC / DC-DC dual-mode converter **103** and DC-DC converter **104** is necessary to supply operating power to the transient DC loads when certain ones of them request more than their standby power. This configuration can ensure that the system operates at or near its capacity as opposed to having extraneous capacity that is underutilized.

Use of the DC-AC / DC-DC dual-mode converter to produce DC power does result in the interruption of power supply to the AC loads. However, in preferable embodiments the AC loads are consumer power outlets that are used to charge PEDs. PEDs typically have their own battery that can continue to operate even when the outlets are not functioning. Furthermore interruptions in preferred embodiments will be limited in duration because the transient DC loads only require operating power for short durations. Therefore, the overall inconvenience to the user is minimized.

DC-AC / DC-DC dual-mode converters for use in embodiments may selectively supplement DC-DC converters by changing the pulse-width modulation (PWM) value of the current from a sine wave determined by a lookup table to a fixed PWM value equating to the required DC voltage.

In a preferred embodiment, the overall power supply system has available 150W 28V of DC power and 250W 110V 60Hz of AC power when the DC-DC converter is producing DC power and the DC-AC / DC-DC dual-mode converter is producing AC power.

In certain embodiments, whether particular components are in an inactive or standby state can be controlled in part according to the status of the operating environment. For example, in aircraft during critical flight phases such as takeoff and landing, power flow to consumer power outlets may be turned off, as passengers should not be charging devices during this time. Similarly, seat actuators for reclining passenger seats may be disabled as passengers should keep their seats in the upright position.

Regarding the structure of the communication bus connecting the microcontroller and various components, it should be understood that any communication bus structure that allows for sufficient reaction to loading conditions may be employed. Without limitation, such bus structures may employ CANbus, Ethernet, RS-485 or serial communication. Various information may be exchanged over the communication bus, for instance components can indicate their power or voltage requirements.

Embodiments of the present disclosure may provide various advantages over previous systems.

For instance, significant weight savings may be achieved in an embodiment system supplying power to a multi-function aircraft passenger seat. In previous designs, separate power converters for supporting an IFE unit, a consumer power outlet, a reading light and a seat actuator would together weight approximate 8 pounds and require 575W of power supply capacity. Each of the power supplies would also require an EMI filter and a PFC stage. However, if the power supply system for the seat were limited to 400W of total capacity, only a single interface to the aircraft power grid would be required. Also the need for EMI filters and PFC stages would be reduced, along with the need for more complex cabling. An embodiment 400W power supply system having a multimode converter would weigh approximately 4 pounds, resulting in a weight reduction of approximately 50% or 4 pounds over the previous design. These savings are for a single passenger seat. Additional weight savings for connectors and cables may also be achieved. Moreover, these weight savings are multiplied as the number of seats taking advantage of the disclosed subject matter increases. Substantial savings in equipment, maintenance and operating costs may therefore be achieved. Power supply weight savings may be especially pronounced in aircraft having first and business class seating.

System reliability and reduced heat loading may also be benefits of certain embodiments. Additional advantages will be apparent to those of ordinary skill in the art to which the present disclosure pertains.

The present invention is set out in the appended set of claims. The embodiments and/or examples of the present disclosure which are not covered by the appended claims are considered as not being part of the present invention
Embodiments set out above relate to a power supply system, characterized by a DC-AC / DC-DC dual-mode converter (103); a DC-DC converter (104); at least one steady state DC load (109), at least one transient DC load (107; 108), and at least one AC load (105); wherein when in a first mode of operation the DC-AC / DC-DC dual-mode converter (103) is configured to provide AC power to the AC loads (105) and the DC-DC converter (104) is configured to provide DC operating power to the steady state DC loads (109) and DC standby power to the transient DC loads (107; 108); wherein when in a second mode of operation the DC-AC / DC-DC dual-mode converter (103) is cross coupled with the DC-DC converter (104) and together supply DC operating power to at least one of the transient DC loads (107; 108) and the steady state DC loads (109).

Particular embodiments may include any of the following optional features, alone or in combination, the scope of the invention is defined by the combination as claimed: The system comprises a microcontroller (113) which may further be configured to cause the DC-AC / DC-DC dual-mode converter (103) and DC-DC converter (104) to operate in the second mode of operation when at least one of the transient DC loads (107; 108), having a higher priority value than a priority value of each of the AC loads (105), is requesting power and there is insufficient additional power available from the DC-DC converter (104).

The transition between the first mode of operation and the second mode of operation and the cross coupling of the DC-AC / DC-DC converter (103) with the DC-DC converter (104) is facilitated by a first and second isolation switch (111, 112).

The DC-AC / DC-DC dual-mode converter (103) and the DC-DC converter (104) may be configured to receive power from a power source through an electromagnetic interference (EMI) filter (101) and a power factor correction (PFC) stage (102).

The power source is a generator on an aircraft.

The transient DC loads (107; 108) may include a seat actuator (107) and a reading light (108), the steady state DC loads include an inflight entertainment system (109), and the AC loads (105) include a consumer power outlet (105).

The DC-DC converter (104) is capable of simultaneously supplying operating power to the steady-state DC loads (109) and standby power to the transient DC loads (107; 108) while the power supply system is in the first mode of operation.

Embodiments set out above further relate to a method of power management, characterized by the steps of: providing a DC-AC / DC-DC dual-mode converter (103) capable of selectively outputting DC or AC power; providing a DC-DC converter (104); wherein the DC-AC / DC-DC dual-mode converter (103) and the DC/DC converter (104) each receive input power from a power source; supplying, in a first mode of operation, DC operating power from the DC-DC converter (104) to at least one steady-state DC load (109) and DC standby power to at least one transient DC load (107; 108) and supplying AC power from the DC-AC / DC-DC dual-mode converter (103) to at least one AC load (105); wherein the AC loads (105), steady-state DC loads (109) and transient DC loads (107; 108) are each assigned a priority value; receiving a request for operating power from one of the transient DC loads (107; 108); if adequate additional power is not available from the DC-DC converter (104) and the transient DC loads (107; 108) requesting power each have a priority value higher than priority values of the AC loads (105), then loads with a lowest priority value are the AC loads, entering a second mode of operation in which the supply of power to the AC loads (105) is halted, the AC-DC / DC-DC converter (103) transitions to a DC mode and is cross coupled with the DC-DC converter (104) to supply operating power to the transient DC loads (107; 108) requesting power.

Particular embodiments may include any of the following optional features, alone or in combination:

The method further may comprise the steps of: returning the DC-AC / DC-DC dual-mode converter (103) and the DC-DC converter (104) to the first mode of operation when the transient DC loads (107; 108) are no longer requesting operating power.

A microcontroller may control (113) whether the DC-AC / DC-DC dual-mode converter (103) and the DC-DC converter (104) are operating in either the first mode of operation or the second mode of operation.

The transition between the first mode of operation and the second mode of operation and the cross coupling of the DC-AC / DC-DC dual-mode converter (103) to the DC-DC converter (104) is facilitated by a first and second isolation switch (111, 112).

The DC-AC / DC-DC dual-mode converter (103) and the DC-DC converter (104) may receive power from the power source through an electromagnetic interference (EMI) filter (101) and a power factor correction (PFC) stage (102).

The power source is a generator on an aircraft.

The transient DC loads (107; 108) may include a seat actuator (107) and a reading light (108), the steady state DC loads (109) may include an inflight entertainment system (109), and the AC loads (105) may include a consumer power outlet (105).

The DC-DC converter (104) is capable of simultaneously supplying DC operating power to the steady-state DC loads (109) and DC standby power to the transient DC loads (107; 108) without cross coupling of the DC-AC / DC-DC dual-mode converter (103) and the DC-DC converter (104).

Embodiments set out above further relate to a power supply system, characterized by: a power factor correction (PFC) stage (102) configured to receive power from a power source; a DC-AC / DC-DC dual-mode converter (103) configured to supply power to an AC load (105) through an AC output (106); a DC-DC converter (104) configured to supply power to a plurality of DC loads (107; 108; 109) through a DC output (110), the DC loads including at least one transient load (107; 108) and at least one steady state load (109); a first isolation switch (111) electrically disposed between the DC-AC / DC-DC dual-mode converter (103) and the DC-DC converter (104); a second isolation (112) switch electrically disposed between the DC-AC / DC-DC dual-mode converter (103) and the AC output (106); a microcontroller (113) configured to control the first and second isolation switches (111; 112) and selectively cause the DC-AC / DC-DC dual-mode converter (103) to enter one of an AC mode in which the first isolation switch (111) is open and the second isolation switch (112) is closed and DC-AC / DC-DC dual-mode converter (103) supplies AC power to the AC load (105), and a DC mode in which the first isolation switch (111) is closed and the second isolation switch (112) is open and the DC-AC / DC-DC dual-mode converter (103) is cross-coupled with the DC-DC converter (104) and supplies DC power to one or more of the transient DC loads (107; 108) that is requesting operating power.

Particular embodiments may include any of the following optional features, alone or in combination, the scope of the invention is defined by the combination as claimed:The power source is a generator on an aircraft.

The DC loads (107; 108; 109) may include a seat actuator (107), an inflight entertainment system (109), and a reading light (108) and the AC loads (105) include a consumer power outlet (105).

The microcontroller (113) may control whether the DC-AC / DC-DC dual-mode converter (103) operates in an AC mode or a DC mode according to a priority scheme in which each of the loads are assigned a priority value.

## Claims

1. An aircraft power supply system, comprising:
a power source formed as an aircraft generator;
a DC-AC / DC-DC dual-mode converter (103) configured to receive power from the power source;
a DC-DC converter (104) configured to receive power from the power source and electrically interconnected with a DC output (110);
a first isolation switch (111) electrically interconnecting the DC-AC / DC-DC dual mode converter (103) with DC-DC converter (104);
a second isolation switch (112) electrically interconnecting the DC-AC / DC-DC dual mode converter with an AC output (106);
at least one steady state DC load (109), at least one transient DC load (107; 108), and at least one AC load (105); and
a microcontroller in communication with the AC output (106) and DC output (110) and configured to control the first and second isolation switches (111; 112);
wherein the microcontroller is configured to cause the power supply system to operate in a first mode of operation and a second mode of operation;
wherein when in a first mode of operation the first isolation switch (111) is open and the second isolation switch (112) is closed and the DC-AC / DC-DC dual-mode converter (103) is configured to provide AC power to the AC loads (105) and the DC-DC converter (104) is configured to provide DC operating power to the steady state DC loads (109) and DC standby power to the transient DC loads (107; 108);
wherein when in a second mode of operation the first isolation switch (111) is closed and the second isolation switch (112) is open and the DC-AC / DC-DC dual-mode converter (103) is cross coupled with the DC-DC converter (104) and are together configured to supply DC operating power to at least one of the transient DC loads (107; 108) and the steady state DC loads (109).

2. The system of claim 1, further **characterized in that** the microcontroller (113) is configured to cause the DC-AC / DC-DC dual-mode converter (103) and DC-DC converter (104) to operate in the second mode of operation when at least one of the transient DC loads (107; 108), having a higher priority value than a priority value of each of the AC loads (105), is requesting power and there is insufficient additional power available from the DC-DC converter (104).

3. The system of any of claims 1 to 2, **characterized in that** the DC-AC / DC-DC dual-mode converter (103) and the DC-DC converter (104) are configured to receive power from the power source through an electromagnetic interference (EMI) filter (101) and a power factor correction (PFC) stage (102).

4. The system of any of claims 1 to 3, **characterized in that** the transient DC loads (107; 108) include a seat actuator (107) and a reading light (108), the steady state DC loads include an inflight entertainment system (109), and the AC loads (105) include a consumer power outlet (105).

5. The system of any of claims 1 to 4, **characterized in that** the DC-DC converter (104) is capable of simultaneously supplying operating power to the steady-state DC loads (109) and standby power to the transient DC loads (107; 108) while the power supply system is in the first mode of operation.

6. A method of aircraft power supply management, **characterized by** the steps of:
providing a power source formed as an aircraft generator;
providing a DC-AC / DC-DC dual-mode converter (103) receiving power from the power source and capable of selectively outputting DC or AC power;
providing a DC-DC converter (104);
providing a first isolation switch (111) electrically interconnecting the DC-AC / DC-DC dual mode converter (103) with DC-DC converter (104); and
providing a second isolation switch (112) electrically interconnecting the DC-AC / DC-DC dual mode converter with an AC output (106);
wherein the DC-AC / DC-DC dual-mode converter (103) and the DC/DC converter (104) each receive input power from the power source;
supplying, in a first mode of operation, in which the first isolation switch (111) is open and the second isolation switch (112) is closed, DC operating power from the DC-DC converter (104) to at least one steady-state DC load (109) and DC standby power to at least one transient DC load (107; 108) and supplying AC power from the DC-AC / DC-DC dual-mode converter (103) to at least one AC load (105);
wherein the AC loads (105), steady-state DC loads (109) and transient DC loads (107; 108) are each assigned a priority value;
receiving a request for operating power from one of the transient DC loads (107; 108);
if adequate additional power is not available from the DC-DC converter (104) and the transient DC loads (107; 108) requesting power each have a priority value higher than priority values of the AC loads (105), thus loads with a lowest priority value are the AC loads, then entering a second mode of operation, in which the first isolation switch (111) is closed and the second isolation switch (112) is open and in which the supply of power to the AC loads (105) is halted, the AC-DC / DC-DC converter (103) transitions to a DC mode and is cross coupled with the DC-DC converter (104) to supply operating power to the at least one steady-state DC load (109) and the transient DC loads (107; 108) requesting power.

7. The method of claim 6, further **characterized by** the steps of:
returning the DC-AC / DC-DC dual-mode converter (103) and the DC-DC converter (104) to the first mode of operation when the transient DC loads (107; 108) are no longer requesting operating power.

8. The method of claim 7, **characterized in that** a microcontroller controls (113) whether the DC-AC / DC-DC dual-mode converter (103) and the DC-DC converter (104) are operating in either the first mode of operation or the second mode of operation.

9. The method of any of claims 6-8,
**characterized in that** the transition between the first mode of operation and the second mode of operation and the cross coupling of the DC-AC / DC-DC dual-mode converter (103) to the DC-DC converter (104) are facilitated by the first and the second isolation switch (111, 112).

10. The method of any of claims 6-9, **characterized in that** the DC-AC / DC-DC dual-mode converter (103) and the DC-DC converter (104) receive power from the power source through an electromagnetic interference (EMI) filter (101) and a power factor correction (PFC) stage (102).

11. The method of any of claims 6-10, **characterized in that** the transient DC loads (107; 108) include a seat actuator (107) and a reading light (108), the steady state DC loads (109) include an inflight entertainment system (109), and the AC loads (105) include a consumer power outlet (105).

12. The method of claim 11, **characterized in that** the DC-DC converter (104) is capable of simultaneously supplying DC operating power to the steady-state DC loads (109) and DC standby power to the transient DC loads (107; 108) without cross coupling of the DC-AC / DC-DC dual-mode converter (103) and the DC-DC converter (104).

## Patentansprüche

1. Flugzeug-Stromversorgungssystem, umfassend:
eine Stromquelle, die als ein Flugzeuggenerator ausgebildet ist;
einen DC-AC/DC-DC-Dualmodus-Wandler (103), der dazu ausgelegt ist, Strom von der Stromquelle zu empfangen;
einen DC-DC-Wandler (104), der dazu ausgelegt ist, Strom von der Stromquelle zu empfangen, und elektrisch mit einem DC-Ausgang (110) verbunden ist;
einen ersten Isolationsschalter (111), der den DC-AC/DC-DC-Dualmodus-Wandler (103) elektrisch mit dem DC-DC-Wandler (104) verbindet;
einen zweiten Isolationsschalter (112), der den DC-AC/DC-DC-Dualmodus-Wandler elektrisch mit einem AC-Ausgang (106) verbindet;
mindestens eine stationäre DC-Last (109), mindestens eine transiente DC-Last (107; 108) und mindestens eine AC-Last (105); und
einen Mikrocontroller in Kommunikation mit dem AC-Ausgang (106) und dem DC-Ausgang (110), der zum Steuern des ersten und des zweiten Isolationsschalters (111; 112) ausgelegt ist;
wobei der Mikrocontroller dazu ausgelegt ist, zu bewirken, dass das Stromversorgungssystem in einem ersten Betriebsmodus und einem zweiten Betriebsmodus arbeitet;
wobei, wenn in einem ersten Betriebsmodus der erste Isolationsschalter (111) offen ist und der zweite Isolationsschalter (112) geschlossen ist, der DC-AC/DC-DC-Dualmodus-Wandler (103) dazu ausgelegt ist, den AC-Lasten (105) Wechselstrom zuzuführen, und der DC-DC-Wandler (104) dazu ausgelegt ist, den stationären DC-Lasten (109) DC-Betriebsstrom und den transienten DC-Lasten (107; 108) DC-Bereitschaftsstrom zuzuführen;
wobei, wenn in einem zweiten Betriebsmodus der erste Isolationsschalter (111) geschlossen und der zweite Isolationsschalter (112) offen ist und der DC-AC/DC-DC-Dualmodus-Wandler (103) mit dem DC-DC-Wandler (104) kreuzgekoppelt ist, sie zusammen dazu ausgelegt sind, mindestens einer der transienten DC-Lasten (107; 108) und der stationären DC-Lasten (109) DC-Betriebsstrom zuzuführen.

2. System nach Anspruch 1, ferner **dadurch gekennzeichnet, dass** der Mikrocontroller (113) dazu ausgelegt ist, zu bewirken, dass der DC-AC/DC-DC-Dualmodus-Wandler (103) und der DC-DC-Wandler (104) in dem zweiten Betriebsmodus arbeiten, wenn mindestens eine der transienten DC-Lasten (107; 108), die einen höheren Prioritätswert als ein Prioritätswert jeder der AC-Lasten (105) hat, Strom anfordert und nicht genügend zusätzlicher Strom von dem DC-DC-Wandler (104) verfügbar ist.

3. System nach einem der Ansprüche 1 bis 2, **dadurch gekennzeichnet, dass** der DC-AC/DC-DC-Dualmodus-Wandler (103) und der DC-DC-Wandler (104) dazu ausgelegt sind, durch ein Filter (101) für elektromagnetische Interferenz (EMI) und eine Leistungsfaktorkorrektur(PFC)-Stufe (102) Strom von der Stromquelle zu empfangen.

4. System nach einem der Ansprüche 1 bis 3, **dadurch gekennzeichnet, dass** die transienten DC-Lasten (107; 108) einen Sitzaktor (107) und ein Leselicht (108) umfassen, die stationären DC-Lasten ein Bordunterhaltungssystem (109) umfassen und die AC-Lasten (105) eine Verbrauchersteckdose (105) umfassen.

5. System nach einem der Ansprüche 1 bis 4, **dadurch gekennzeichnet, dass** der DC-DC-Wandler (104) in der Lage ist, gleichzeitig den stationären DC-Lasten (109) Betriebsstrom und den transienten DC-Lasten (107; 108) Bereitschaftsstrom zuzuführen, während sich das Stromversorgungssystem in dem ersten Betriebsmodus befindet.

6. Verfahren zur Verwaltung einer Flugzeugstromversorgung, **gekennzeichnet durch** die Schritte von:
Bereitstellen einer Stromquelle, die als ein Flugzeuggenerator ausgebildet ist;
Bereitstellen eines DC-AC/DC-DC-Dualmodus-Wandlers (103), der Strom von der Stromquelle empfängt und selektiv Gleichstrom oder Wechselstrom abgeben kann;
Bereitstellen eines DC-DC-Wandlers (104);
Bereitstellen eines ersten Isolationsschalters (111), der den DC-AC/DC-DC-Dualmodus-Wandler (103) elektrisch mit dem DC-DC-Wandler (104) verbindet; und
Bereitstellen eines zweiten Isolationsschalters (112), der den DC-AC/DC-DC-Dualmodus-Wandler elektrisch mit einem AC-Ausgang (106) verbindet;
wobei der DC-AC/DC-DC-Dualmodus-Wandler (103) und der DC/DC-Wandler (104) jeweils Eingangsstrom von der Stromquelle empfangen;
Zuführen, in einem ersten Betriebsmodus, in dem der erste Isolationsschalter (111) offen und der zweite Isolationsschalter (112) geschlossen ist, von DC-Betriebsstrom von dem DC-DC-Wandler (104) zu mindestens einer stationären DC-Last (109) und DC-Bereitschaftsstrom zu mindestens einer transienten DC-Last (107; 108), und Zuführen von Wechselstrom von dem DC-AC/DC-DC-Dualmodus-Wandler (103) zu mindestens einer AC-Last (105);
wobei den AC-Lasten (105), stationären DC-Lasten (109) und transienten DC-Lasten (107; 108) jeweils ein Prioritätswert zugeordnet wird;
Empfangen einer Anforderung von Bereitschaftsstrom von einer der transienten DC-Lasten (107; 108);
wenn kein geeigneter zusätzlicher Strom von dem DC-DC-Wandler (104) verfügbar ist und die transienten DC-Lasten (107; 108), die Strom anfordern, jeweils einen Prioritätswert aufweisen, der höher ist als Prioritätswerte der AC-Lasten (105), so dass Lasten mit einem niedrigsten Prioritätswert die AC-Lasten sind, dann
Eintreten in einen zweiten Betriebsmodus, in dem der erste Isolationsschalter (111) geschlossen und der zweite Isolationsschalter (112) offen ist und in dem die Zufuhr von Strom zu den AC-Lasten (105) unterbrochen wird, der AC-DC / DC-DC-Wandler (103) in einen DC-Modus übergeht und mit dem DC-DC-Wandler (104) kreuzgekoppelt wird, um der mindestens einen stationären DC-Last (109) und den transienten DC-Lasten (107; 108), die Strom anfordern, Betriebsstrom zuzuführen.

7. Verfahren nach Anspruch 6, ferner **gekennzeichnet durch** die Schritte von:
Rückführen des DC-AC/DC-DC-Dualmodus-Wandlers (103) und des DC-DC-Wandlers (104) in den ersten Betriebsmodus, wenn die transienten DC-Lasten (107; 108) keinen Betriebsstrom mehr anfordern.

8. Verfahren nach Anspruch 7, **dadurch gekennzeichnet, dass** ein Mikrocontroller (113) steuert, ob der DC-AC/DC-DC-Dualmodus-Wandler (103) und der DC-DC-Wandler (104) entweder in dem ersten Betriebsmodus oder in dem zweiten Betriebsmodus arbeiten.

9. Verfahren nach einem der Ansprüche 6-8, **dadurch gekennzeichnet, dass** der Übergang zwischen dem ersten Betriebsmodus und dem zweiten Betriebsmodus und die Kreuzkopplung des DC-AC/DC-DC-Dualmodus-Wandlers (103) mit dem DC-DC-Wandler (104) durch den ersten und den zweiten Isolationsschalter (111, 112) erleichtert werden.

10. Verfahren nach einem der Ansprüche 6-9, **dadurch gekennzeichnet, dass** der DC-AC/DC-DC-Dualmodus-Wandler (103) und der DC-DC-Wandler (104) durch ein Filter (101) für elektromagnetische Störung (EMI) und eine Leistungskorrekturkorrektur(PFC)-Stufe (102) Strom von der Stromquelle empfangen.

11. Verfahren nach einem der Ansprüche 6-10, **dadurch gekennzeichnet, dass** die transienten DC-Lasten (107; 108) einen Sitzaktor (107) und ein Leselicht (108) umfassen, die stationären DC-Lasten (109) ein Bordunterhaltungssystem (109) umfassen und die AC-Lasten (105) eine Verbrauchersteckdose (105) umfassen.

12. Verfahren nach Anspruch 11, **dadurch gekennzeichnet, dass** der DC-DC-Wandler (104) in der Lage ist, gleichzeitig den stationären DC-Lasten (109) DC-Betriebsstrom und den transienten DC-Lasten (107; 108) DC-Bereitschaftsstrom ohne Kreuzkopplung des DC-AC/DC-DC-Dualmodus-Wandlers (103) und des DC-DC-Wandlers (104) zuzuführen.

## Revendications

1. Système d'alimentation pour aéronef, comprenant :
une source d'alimentation réalisée sous la forme d'un générateur de bord :
un convertisseur bimodal CC-CA / CC-CC (103) configuré pour recevoir une alimentation à partir de la source d'alimentation ;
un convertisseur CC-CC (104) configuré pour recevoir une alimentation à partir de la source d'alimentation et interconnecté par voie électrique à une sortie CC (110) ;
un premier interrupteur d'isolement (111) interconnectant par voie électrique le convertisseur bimodal CC-CA / CC-CC (103) avec le convertisseur CC-CC (104) ;
un deuxième interrupteur d'isolement (112) interconnectant par voie électrique le convertisseur bimodal CC-CA / CC-CC avec une sortie CA (106) ;
au moins une charge CC en régime permanent (109), au moins une charge CC transitoire (107 ; 108) et au moins une charge CA (105) ; et
un microcontrôleur mis en communication avec la sortie CA (106) et la sortie CC (110) et configuré pour la commande du premier et du deuxième interrupteur d'isolement (111 ; 112) ;
dans lequel le microcontrôleur est configuré pour faire en sorte que le système d'alimentation travaille dans un premier mode d'exploitation et dans un deuxième mode d'exploitation ;
dans lequel, lorsque ledit système travaille dans un premier mode d'exploitation, le premier interrupteur d'isolement (111) est ouvert et le deuxième interrupteur d'isolement (112) est fermé et le convertisseur bimodal CC-CA / CC-CC (103) est configuré pour fournir une alimentation CA aux charges CA (105) et le convertisseur CC-CC (104) est configuré pour fournir du courant d'exploitation CC aux charges CC en régime permanent (109) et une alimentation CC de secours aux charges CC transitoires (107 ; 108) ;
dans lequel, lorsque ledit système travaille dans un deuxième mode d'exploitation, le premier interrupteur d'isolement (111) est fermé et le deuxième interrupteur d'isolement (112) est ouvert et le convertisseur bimodal CC-CA / CC-CC (103) fait l'objet d'un couplage croisé avec le convertisseur CC-CC (104) et sont ensemble configurés pour fournir du courant d'exploitation CC à au moins une des charges CC transitoires (107 ; 108) et aux charges CC en régime permanent (109).

2. Système selon la revendication 1, **caractérisé en outre en ce que** le microcontrôleur (113) est configuré pour faire en sorte que le convertisseur bimodal CC-CA / CC-CC (103) et le convertisseur CC-CC (104) travaillent dans le deuxième mode d'exploitation lorsqu'au moins une des charges CC transitoires (107 ; 108), qui possède une valeur de priorité supérieure à une valeur de priorité de chacune des charges CA (105), sollicite du courant et lorsque du courant supplémentaire suffisant n'est pas disponible à partir du convertisseur CC-CC (104).

3. Système selon l'une quelconque des revendications 1 à 2, **caractérisé en ce que** le convertisseur bimodal CC-CA / CC-CC (103) et le convertisseur CC-CC (104) sont configurés pour recevoir une alimentation à partir de la source d'alimentation via un filtre antiperturbation électromagnétique (EMI) (101) et un étage (102) de correction de facteur de puissance (PFC).

4. Système selon l'une quelconque des revendications 1 à 3, **caractérisé en ce que** les charges CC transitoires (107 ; 108) englobent un actionneur de siège (107) et une lampe de lecture (108), les charges CC en régime permanent englobent un système de distractions en vol (109) et les charges CA (105) englobent une prise de courant (105) destinée à un consommateur.

5. Système selon l'une quelconque des revendications 1 à 4, **caractérisé en ce que** le convertisseur CC-CC 104) est capable d'alimenter de manière simultanée du courant d'exploitation aux charges CC en régime permanent (109) et une alimentation de secours aux charges CC transitoires (107 ; 108) tandis que le système d'alimentation travaille dans le premier mode d'exploitation.

6. Procédé de gestion d'une alimentation pour aéronef, **caractérisé par** les étapes consistant à :
procurer une source d'alimentation réalisée sous la forme d'un générateur de bord :
procurer un convertisseur bimodal CC-CA / CC-CC (103) qui reçoit une alimentation à partir de la source d'alimentation et qui est capable de fournir de manière sélective du courant CC ou CA ;
procurer un convertisseur CC-CC (104) ;
procurer un premier interrupteur d'isolement (111) interconnectant par voie électrique le convertisseur bimodal CC-CA / CC-CC (103) avec le convertisseur CC-CC (104) ; et
procurer un deuxième interrupteur d'isolement (112) interconnectant par voie électrique le convertisseur bimodal CC-CA / CC-CC avec une sortie CA (106) ;
dans lequel le convertisseur bimodal CC-CA / CC-CC (103) et le convertisseur CC-CC (104) reçoivent chacun une alimentation d'entrée à partir de la source d'alimentation ;
fournir, dans un premier mode d'exploitation, dans lequel le premier interrupteur d'isolement (111) est ouvert et le deuxième interrupteur d'isolement (112) est fermé, du courant d'exploitation CC à partir du convertisseur CC-CC (104) à au moins une charge CC en régime permanent (109) et une alimentation CC de secours à au moins une charge CC transitoire (107 ; 108), et fournir du courant CA à partir du convertisseur bimodal CC-CA / CC-CC (103) à au moins une charge CA (105) ;
dans lequel une valeur de priorité est assignée à chacune des charges CA (105), des charges CC en régime permanent (109) et des charges CC transitoires (107 ; 108) ;
recevoir une sollicitation pour un courant d'exploitation à partir d'une des charges CC transitoires (107 ; 108) ;
lorsqu'une alimentation supplémentaire adéquate n'est pas disponible à partir du convertisseur CC-CC (104) et lorsque les charges CC transitoires (107 ; 108) sollicitant du courant possèdent chacune une valeur de priorité supérieure aux valeurs de priorité des charges CA (105), les charges CA étant par conséquent affectées d'une valeur de priorité la plus basse, entrer dans un deuxième mode d'exploitation dans lequel le premier interrupteur d'isolement (111) est fermé et le deuxième interrupteur d'isolement (112) est ouvert et dans lequel l'alimentation en courant des charges CA (105) est interrompue, le convertisseur bimodal CC-CA / CC-CC (103) opère une transition pour passer à un mode CC et fait l'objet d'un couplage croisé avec le convertisseur CC-CC (104) dans le but de fournir un courant d'exploitation à ladite au moins une charge CC en régime permanent (109) et aux charges CC transitoires (107 ; 108) sollicitant du courant.

7. Procédé selon la revendication 6, **caractérisé en outre par** l'étape consistant à :
renvoyer le convertisseur bimodal CC-CA / CC-CC (103) et le convertisseur CC-CC (104) au premier mode d'exploitation lorsque les charges CC transitoires (107 ; 108) ne sollicitent plus du courant d'exploitation.

8. Procédé selon la revendication 7, **caractérisé en ce qu'**un microcontrôleur (113) contrôle le fait de savoir si le convertisseur bimodal CC-CA / CC-CC (103) et le convertisseur CC-CC (104) travaillent soit dans le premier mode d'exploitation, soit dans le deuxième mode d'exploitation.

9. Procédé selon l'une quelconque des revendications 6 à 8, **caractérisé en ce que** la transition entre le premier mode d'exploitation et le deuxième mode d'exploitation et le couplage croisé du convertisseur bimodal CC-CA / CC-CC (103) au convertisseur CC-CC (104) sont facilités par le premier et le deuxième interrupteur d'isolement (111, 112).

10. Procédé selon l'une quelconque des revendications 6 à 9, **caractérisé en ce que** le convertisseur bimodal CC-CA / CC-CC (103) et le convertisseur CC-CC (104) reçoivent une alimentation à partir de la source d'alimentation via un filtre antiperturbation électromagnétique (EMI) (101) et un étage (102) de correction de facteur de puissance (PFC).

11. Procédé selon l'une quelconque des revendications 6 à 10, **caractérisé en ce que** les charges CC transitoires (107 ; 108) englobent un actionneur de siège (107) et une lampe de lecture (108), les charges CC en régime permanent (109) englobent un système de distractions en vol (109) et les charges CA (105) englobent une prise de courant (105) destinée à un consommateur.

12. Procédé selon la revendication 11, **caractérisé en ce que** le convertisseur CC-CC 104) est capable d'alimenter de manière simultanée du courant d'exploitation aux charges CC en régime permanent (109) et une alimentation de secours aux charges CC transitoires (107 ; 108) en l'absence d'un couplage croisé du convertisseur bimodal CC-CA / CC-CC (103) et du convertisseur CC-CC (104).
